# EUROPÄISCHE PATENTSCHRIFT

(11) **EP 3 467 448 B1**
(45) Veröffentlichungstag und Bekanntmachung des Hinweises auf die Patenterteilung: **18.09.2019**
(21) Anmeldenummer: 17195226.0
(22) Anmeldetag: 06.10.2017
(51) Int. Cl.: G01F 23/284, G01S 13/38

(54) **RADARFÜLLSTANDMESSGERÄT MIT RADARCHIPS AUF VERSCHIEDENEN EBENEN EINER PLATINE**
RADAR FILL LEVEL MEASURING DEVICE WITH RADAR CHIPS ON DIFFERENT LEVELS OF A BOARD
APPAREIL DE MESURE DE NIVEAU DE REMPLISSAGE À RADAR POURVU DE PUCES RADAR À NIVEAUX DIFFÉRENTS D'UNE CARTE

(43) Veröffentlichungstag der Anmeldung: 10.04.2019
(73) Patentinhaber: VEGA Grieshaber KG, 77709 Wolfach (DE)
(72) Erfinder: WÄLDE, Steffen, 78078 Niedereschach (DE); WELLE, Roland, 77756 Hausach (DE)
(74) Vertreter: Maiwald Patent- und Rechtsanwaltsgesellschaft mbH

(56) Entgegenhaltungen:
- EP-A1- 2 060 883
- EP-A1- 3 171 138
- WO-A1-2016/202394
- US-A- 5 420 591
- US-A1- 2007 109 178

## Beschreibung

### Gebiet der Erfindung

Die Erfindung betrifft die Füllstandmessung und die Erfassung der Topologie einer Füllgutoberfläche in einem Behälter. Insbesondere betrifft die Erfindung ein Radarfüllstandmessgerät zur Füllstandmessung und/oder zur Erfassung der Topologie einer Füllgutoberfläche in einem Behälter.

### Hintergrund

Zur Füllstandmessung und zur Erfassung der Topologie einer Füllgutoberfläche werden heute Radarfüllstandmessgeräte verwendet. Im Gegensatz zu vielen anderen Bereichen wurde der Durchbruch für die Radartechnik in der Füllstandmessung erst möglich, nachdem extrem kleine Reflexionssignale von der Elektronik der Messgeräte erfasst und verarbeitet werden konnten.

Moderne Füllstandmessgeräte und Topologiemessgeräte, die in der Lage sind, die genaue Form der Oberfläche eines Füllguts zu erfassen, zeichnen sich nicht nur durch eine hohe Sendefrequenz, die typischerweise im Gigahertzbereich, beispielsweise im Bereich von 75 GHz bis 85 GHz liegt, aus, sondern sind auch in der Lage, Amplitudenunterschiede des reflektierten Signals in einem Bereich bis zu 100 dB sicher zu verarbeiten.

Zur Erzeugung und Verarbeitung der hochfrequenten Sendesignale im Bereich von 79 GHz kann ein monolithisch aufgebauter integrierter Mikrowellenschaltkreis (MMIC) vorgesehen sein. Dieser Baustein kann eine Vielzahl an Sende- und Empfangskanälen aufweisen, die in dieser Anmeldung auch als Radarkanäle bezeichnet werden, so dass die Füllgutoberfläche abgescannt werden kann.

Je genauer die Füllgutoberfläche abgescannt werden soll, desto mehr Sende- und Empfangskanäle sind erforderlich, um eine hochqualitative Abbildung zu erzielen, was mit entsprechend hohem Hardwareaufwand und Energiebedarf einhergeht.

WO 2016/202394 A1 beschreibt eine Hohlleitereinkopplung für einen Zeilenscanner, bei der die antennenseitigen Hohlleiteröffnungen einen Abstand zueinander aufweisen, der kleiner oder gleich der halben Wellenlänge des Sendesignals ist, wobei der Abstand benachbarter Strahlerelemente größer als die halbe Wellenlänge des Sendesignals beträgt. Die Strahlerelemente sind auf derselben Seite der Leiterplatte angeordnet.

### Zusammenfassung der Erfindung

Es ist eine Aufgabe der Erfindung, ein Radarfüllstandmessgerät zum Messen eines Füllstands eines Mediums oder der Topologie eines Mediums in einem Behälter bereitzustellen.

Diese Aufgabe wird durch den Gegenstand des unabhängigen Patentanspruchs gelöst. Weiterbildungen der Erfindung ergeben sich aus den Unteransprüchen und der folgenden Beschreibung.

Ein Aspekt der Erfindung betrifft ein Radarfüllstandmessgerät zur Füllstandmessung oder zur Erfassung der Topologie einer Füllgutoberfläche in einem Behälter, das eine Platine mit einer ersten Platinenebene und einer zweiten Platinenebene, einen ersten Radarchip auf der ersten Platinenebene und einen zweiten Radarchip auf der zweiten Platinenebene aufweist.

Der erste Radarchip und der zweite Radarchip weisen jeweils einen oder mehrere Sendekanäle zum Erzeugen eines Sendesignals und einen oder mehrere Empfangskanäle zum Erfassen der an der Füllgutoberfläche reflektierten Sendesignale auf. Zumindest einer der Sendekanäle des ersten Radarchips ist über eine erste Leitung mit einer Antennenanordnung zum Abstrahlen des Sendesignals verbunden. Zumindest einer der Empfangskanäle des zweiten Radarchips ist über eine zweite Leitung mit der Antennenanordnung zum Empfangen der reflektierten Sendesignale verbunden.

Gemäß einer Ausführungsform der Erfindung weist die Antennenanordnung einen ersten Hohlleiter auf, um das Sendesignal in Richtung Füllgutoberfläche abzustrahlen.

Gemäß einer weiteren Ausführungsform der Erfindung weist die Antennenanordnung einen zweiten Hohlleiter auf, um das reflektierte Sendesignal zu Empfangen.

Gemäß einer weiteren Ausführungsform der Erfindung ist der erste und/oder der zweite Hohlleiter ausgeführt, die erste Platinenebene mit der zweiten Platinenebene zu verbinden. Der erste/zweite Hohlleiter weist einen Endbereich auf, der auf die Unterseite der Platine aufgesetzt ist, wobei der erste/zweite Hohlleiter einen Hauptbereich aufweist, der auf die Oberseite der Platine aufgesetzt ist, und wobei innerhalb der Platine zwischen dem Endbereich und dem Hauptbereich eine Vielzahl an Durchkontaktierungen angeordnet sind, um den ersten/zweiten Hohlleiter auch innerhalb der Platine auszubilden.

Gemäß einer weiteren Ausführungsform der Erfindung weist der erste und/oder der zweite Hohlleiter in seinem Endbereich einen Resonanzraum auf, der mit einem Dielektrikum gefüllt ist.

Gemäß einer weiteren Ausführungsform der Erfindung ist die erste Leitung auf der ersten Platinenebene angeordnet.

Gemäß einer weiteren Ausführungsform der Erfindung ist die zweite Leitung auf der zweiten Platinenebene angeordnet.

Gemäß einer weiteren Ausführungsform der Erfindung weist der erste Radarchip eine erste Synchronisationsschaltung auf, welche zur Erzeugung eines Hochfrequenzsignals eingerichtet ist, wobei der zweite Radarchip eine zweite Synchronisationsschaltung aufweist. Des Weiteren ist eine Hochfrequenzleitungsanordnung vorgesehen, eingerichtet zur Übertragung des Hochfrequenzsignals von der ersten Synchronisationsschaltung an die zweite Synchronisationsschaltung zur Synchronisation der beiden Radarchips, wobei die Hochfrequenzleitungsanordnung eine erste Leiterbahn auf der ersten Platinenebene, eine zweite Leiterbahn auf der zweiten Platinenebene und eine dazwischen angeordnetes Via zum Verbinden der ersten und der zweiten Leiterbahn miteinander aufweist.

Gemäß einer weiteren Ausführungsform der Erfindung weist die Hochfrequenzleitungsanordnung zur Übertragung des Hochfrequenzsignals zwei oder mehr unterschiedliche Leitungstypen auf, die seriell zueinander angeordnet sind.

Gemäß einer weiteren Ausführungsform der Erfindung weist die Hochfrequenzleitungsanordnung einen Hochfrequenzverstärker auf, der in der Hochfrequenzleitungsanordnung angeordnet ist und eingerichtet ist zur Verstärkung des Hochfrequenzsignals.

Gemäß einer weiteren Ausführungsform der Erfindung weist die Hochfrequenzleitungsanordnung einen Hohlleiter auf.

Gemäß einer weiteren Ausführungsform der Erfindung ist auf dem ersten und dem zweiten Radarchip jeweils ein Analog / Digitalwandler integriert.

Gemäß einer weiteren Ausführungsform der Erfindung ist das Radarfüllstandmessgerät eingerichtet zur Erfassung der Topologie eines Mediums in einem Behälter.

Gemäß einer weiteren Ausführungsform der Erfindung ist das Füllstandmessgerät als FMCW Füllstandmessgerät ausgeführt.

Sowohl der erste Radarchip als auch der zweite Radarchip können einen oder mehrere Sendekanäle zum Abstrahlen jeweils eines Sendesignals in Richtung der Füllgutoberfläche und einen oder mehrere Empfangskanäle zum Empfangen der an der Füllgutoberfläche reflektierten Sendesignale aufweisen. Einer oder mehrere der Sendekanäle können auch als kombinierter Sende-Empfangskanal ausgeführt sein.

Die Radarchips können insbesondere integrierte Mikrowellenschaltkreise sein, welche auch als Radarsystem on Chip bezeichnet werden können. Ein solches Radarsystem on Chip (RSoC) ist ein hochintegrierter Mikrowellenschaltkreis mit Schaltungskomponenten für digitale Funktionen, welches, gemäß einer Ausführungsform, in der Lage ist, die komplette Funktionalität eines herkömmlichen Radarsystems für die Signalerzeugung, die Signalverarbeitung und die Überführung der Empfangssignale, also der reflektierten Sendesignale, in digitale Darstellung auf einem einzigen Radarchip zu integrieren.

Jeder der Sendekanäle kann eingerichtet sein, ein hochfrequentes Sendesignal mit einer Frequenz im zwei- oder dreistelligen Gigahertzbereich zu erzeugen, beispielsweise im Bereich zwischen 55GHz bis 65GHz oder zwischen 75 GHz bis 85 GHz oder darüber.

Der erste Radarchip kann als sogenannter Masterchip ausgeführt sein, der ein Synchronisationssignal erzeugt, mit dessen Hilfe der oder die weiteren Radarchips, der/die als Slavechips bezeichnet werden, synchronisiert werden.

Gemäß einer weiteren Ausführungsform der Erfindung ist das Hochfrequenzsignal im Verhältnis zum Sendesignal ein um einen ganzzahligen Faktor geteiltes Hochfrequenzsignal.

Es kann vorgesehen sein, dass die Verstärkerleistung des oder der in der Hochfrequenzleitungsanordnung angeordneten Hochfrequenzverstärker in Abhängigkeit vom Füllstand eingestellt wird, und/oder beispielsweise in Abhängigkeit davon, wie viele Radarchips momentan für die Füllstandmessung verwendet werden.

Gemäß einer weiteren Ausführungsform der Erfindung weist der Hochfrequenzverstärker einen Nutzfrequenzbereich um 20 GHz auf, oder um 40 GHz.

Gemäß einer weiteren Ausführungsform der Erfindung basiert der erste und der zweite Radarchip jeweils auf BiCMOS-Technologie. Gemäß einer weiteren Ausführungsform der Erfindung basieren die Radarchips auf SiGe-Technologie. Gemäß einer weiteren Ausführungsform der Erfindung basieren die Radarchips auf HF-CMOS-Technologie und weisen Hochfrequenzschaltungsteile für Frequenzen von 75 GHz und darüber auf.

Gemäß einer weiteren Ausführungsform der Erfindung handelt es sich bei dem Hochfrequenzverstärker um einen rauscharmen Verstärker (Low Noise Amplifier, LNA) mit separater Spannungsversorgung.

Gemäß einer Ausführungsform der Erfindung wird der Hochfrequenzverstärker ausschließlich in seinem linearen Bereich betrieben. Gegebenenfalls können mehrere Hochfrequenzverstärker in der Hochfrequenzleitungsanordnung vorgesehen sein.

Im Folgenden werden mit Verweis auf die Figuren Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1A zeigt ein Radarfüllstandmessgerät, das in einem Behälter installiert ist, um die Topologie der Oberfläche eines Füllguts in dem Behälter zu erfassen.
Fig. 1B zeigt ein weiteres Radarfüllstandmessgerät.
Fig. 1C zeigt ein weiteres Radarfüllstandmessgerät.
Fig. 2 zeigt eine Array-Antenne eines Radarfüllstandmessgeräts.
Fig. 3 zeigt den Aufbau eines Radarfüllstandmessgeräts mit einem Radarchip.
Fig. 4A zeigt den Aufbau eines weiteren Radarfüllstandmessgeräts mit zwei Radarchips.
Fig. 4B zeigt den Aufbau eines weiteren Radarfüllstandmessgeräts.
Fig. 5 zeigt den Aufbau eines weiteren Radarfüllstandmessgeräts.
Fig. 6 zeigt den Aufbau eines weiteren Radarfüllstandmessgeräts.
Fig. 7 zeigt den Aufbau eines weiteren Radarfüllstandmessgeräts.
Fig. 8 zeigt einen Platinenlagenaufbau.
Fig. 9 zeigt zwei Radarchips mit Hohlleiteranordnung.
Fig. 10A zeigt die Oberseite einer Platine mit einem Radarchip und Hohlleiteranordnung.
Fig. 10B zeigt die Platine der Fig. 10A von der Unterseite aus gesehen.
Fig. 11A zeigt eine Querschnittdarstellung einer Platine mit Radarchips und Hohlleiteranordnung.
Fig. 11B zeigt die Anordnung der Fig. 11A in Draufsicht mit durchsichtiger Platine.
Fig. 12A zeigt eine Via-Anordnung eines Radarfüllstandmessgeräts.
Fig. 12B zeigt die metallisierten Elemente der Via-Anordnung der Fig. 12A.

### Detaillierte Beschreibung von Ausführungsformen

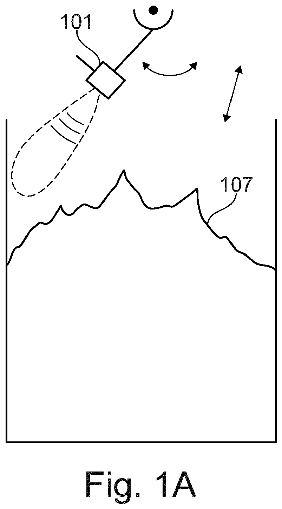

Fig. 1A zeigt ein Radarfüllstandmessgerät, das in einem Behälter installiert ist, um die Topologie der Oberfläche eines Füllguts in dem Behälter zu erfassen. Es kann hochintegrierte Radarchips (RSoCs, Radar System on Chips) 301 aufweisen, die mehrere Sender und Empfänger aufweisen. Diese können auch in Bereichen wie Fahrerassistenzsystemen, Verkehrsüberwachung, Objektüberwachung in Industriebetrieben, Drohnen und vielen weiteren Bereichen eingesetzt werden. Ein Vorteil von mehrkanaligen Radarchips 301 ist es, dass eine Art von Strahlformung durchgeführt werden kann. Radargeräte für Anwendungen im Bereich der Füllstandmessung oder Topologieerfassung von Füllgütern benötigen oft eine Vielzahl (acht oder mehr) an Radarchips 301, um den Anforderungen gerecht zu werden.

Die Topologie erfassende Füllstandmessgeräte 101 tasten die Oberfläche von Schüttgütern ab, um dadurch mehr Informationen über den tatsächlichen Füllstand und dessen Volumen zu erhalten, wie man es bei einer klassischen Füllstandmessung erhalten würde.

Ein Unterschied zu anderen Anwendungsmöglichkeiten ist es, dass auch in großer Distanz noch kleine Öffnungswinkel benötigt werden, was mit einer großen Antennenapertur einhergeht.

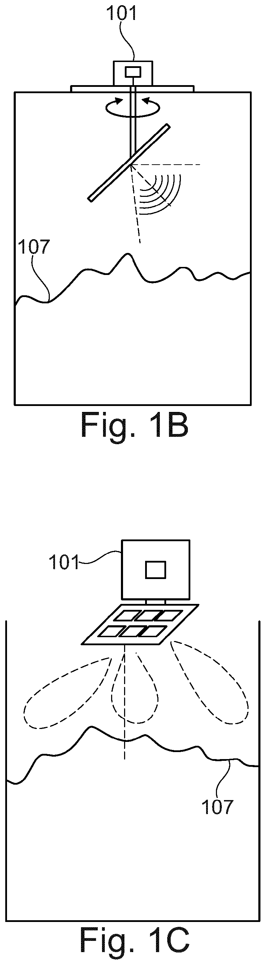

Eine Möglichkeit dies zu erreichen, ist es, ein Ein-Kanal-Radargerät mechanisch zu schwenken (Figur 1A), um so die Oberfläche abzutasten. Eine weitere Möglichkeit sind teilmechanische Systeme (Figur 1B). Dort wird eine Kombination aus analoger oder digitaler Strahlformung mit einem mechanischen Schwenken kombiniert.

Nachteile haben diese Systeme hinsichtlich Robustheit. Mechanische Komponenten sind in rauen Prozessbedingungen wartungsanfällig und in der Herstellung teuer. Deshalb wird vorgeschlagen, vollelektronische Strahlformung durchzuführen (Figur 1C).

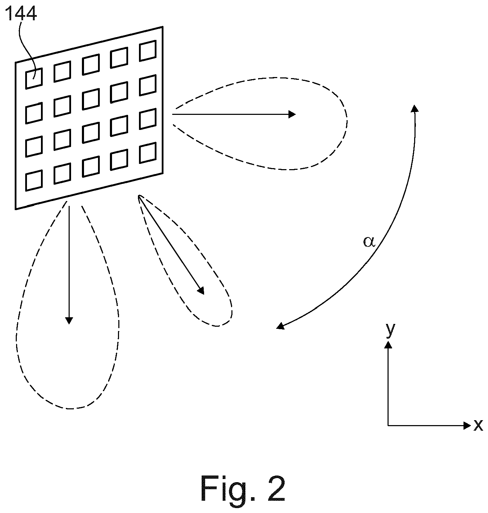

Um mit diesen Beamforming-Radarsystemen vergleichbar große Antennenaperturen zu erreichen, kann eine große Anzahl an Sendern und Empfängern vorgesehen sein. Der Nachteil an der vollelektronischen Strahlformung ist, dass viele Antennen mit verhältnismäßig kleiner Einzelapertur verwendet werden müssen. Außerdem müssen Sender und Empfänger, die üblicherweise mit jeweils einem Antennenelement 144, 303 versehen werden, in zwei Dimensionen (x- und y-Richtung) aufgereiht werden (Figur 2).

Für die Topologie erfassende Füllstandmesstechnik werden deshalb üblicherweise mehr Sender und Empfänger als in obigen Anwendungen benötigt, was in einer Chipanzahl größer vier resultiert.

Die Topologie erfassende Radarfüllstandmessgeräte weisen oft mehrere Sende- und Empfangsantennen auf. Diese Systeme sind auch als MIMO-Systeme (Multiple Input Multiple Output) bekannt. Durch bekannte Verfahren der digitalen Strahlformung können sowohl sende- als auch empfangsseitig die Richtcharakterisika der Sende- und Empfangsgruppenantenne digital beeinflusst werden, wodurch die Abtastung einer Füllgutoberfläche realisiert werden kann.

Diese Füllstandmessgeräte verwenden bisher für jeden Sende- und Empfangskanal mehrere diskrete Hochfrequenzbauelemente, wie Mischer, Low Noise Amplifier, Koppler, Frequenzvervielfacher, spannungsgesteuerte Oszillatoren etc. sowie diskrete Analog-/Digitalwandler, Phasenregelschleifen, Spannungsregler, Filter, Verstärker und weitere Niederfrequenzbauelemente. Diese Eigenschaft macht MIMO-Systeme aufwändig, groß und teuer.

Die hochintegrierten Radarchips 301 haben viele dieser oben genannten Komponenten bereits vollständig auf einem Chip 301 integriert. Integriert sind beispielsweise: PLL, VCO, Mischer, ADCs, Filter, Steuerungseinheiten, SPI Schnittstelle, Verstärker, Schalter, Spannungsregler. Dadurch kann viel Platz auf einer Leiterkarte gespart werden. Ein weiterer Vorteil bieten diese Chips 301 hinsichtlich Kosten, da diese günstiger sind als ein diskreter Aufbau mit mehreren verschiedenen Einzelkomponenten. Die MIMO-Chips 301 haben beispielsweise drei Sender- und vier Empfängerstufen. Ein möglicher Sendefrequenzbereich kann beispielsweise zwischen 55 und 65 GHz oder aber auch zwischen 75 und 85GHz liegen.

Die Radarchips 301 können über eine digitale Schnittstelle (mit zugehörigem Bus 305) (SPI, I²C, etc.) parametriert werden. Es können verschiedene Parameter gesetzt oder ausgelesen werden um die Modulationsart, Bandbreite, Frequenzbereich, Abtastfrequenz, ZF-Filtercharakteristika (Zwischenfrequenzsignal), etc. einzustellen. Üblicherweise werden die analogen ZF-Signale, die Informationen über Abstände und Winkel von Objekten aus dem Überwachungsbereich beinhalten, ebenfalls noch auf dem Radarchip 301 für die weitere Signalverarbeitung digitalisiert.

Das Radarverfahren nachdem diese Radarchips 301 üblicherweise arbeiten ist ein spezielles frequenzmoduliertes Dauerstrichradarverfahren (FMCW-Verfahren, frequency modulated continous wave). Es wird bei einer Messung jedoch nicht nur eine Frequenzrampe moduliert, sondern mehrere hintereinander, die in einem festen Zeitbezug zueinander stehen. Eine mögliche Anzahl an Rampen pro Messung ist beispielsweise 128. Diese 128 Rampen zusammengefasst werden als Frame bezeichnet.

Durch geschickte Signalverarbeitungsalgorithmen lassen sich neben Abständen auch Geschwindigkeiten von mehreren Objekten bestimmen. Die Rampendauer ist im Verhältnis zum klassischen FMCW-Verfahren sehr kurz und liegt üblicherweise im Bereich zwischen 10 und 500µs pro Rampe. Da die HF-Bandbreite der Sendesignale im Bereich zwischen mehreren Hundert Megahertz und vier (oder mehr) Gigahertz liegen kann, muss das Zwischenfrequenzsignal mit hoher Abtastrate digitalisiert werden.

Die Kombination aus hoher HF-Bandbreite und kurzen Rampendauern, resultiert in einer hohen Abtastrate bei der Analog-Digital-Wandlung.

Die Schnittstelle für die digitalisierten Ausgangssignale ist meist eine schnelle serielle, differentielle Digitalschnittstelle 304 wie LVDS oder CSI2. Beim Beispiel eines Radarchips 301 mit vier Empfangskanälen weist der Radarchip 301 seitens der Digitalschnittstelle vier LVDS- bzw. CSI2-Schnittstellen auf, über die das digitalisierte Zwischenfrequenzsignal übertragen wird. Zusätzlich verwenden diese Digitalschnittstellen ein zusätzliches differentielles Clock-Signal, das beim Empfänger der digitalisierten Daten zur Synchronisation der Schnittstellen benötigt wird. Je nach Schnittstelle werden noch weitere Signalleitungen benötigt um Anfang und/oder Ende der Datenpakete zu kennzeichnen.

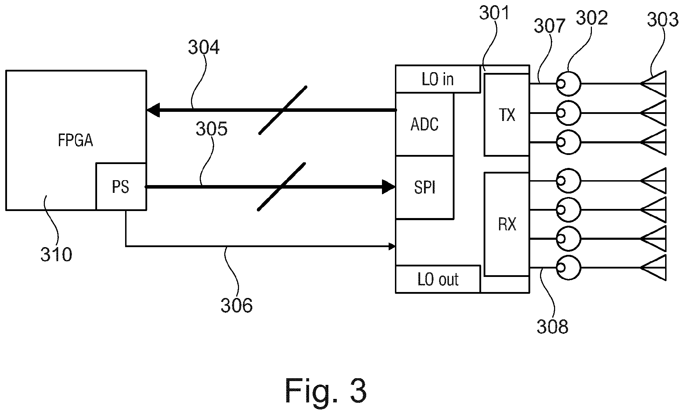

Im Fall, dass der Radarchip 301 für die gewünschte Applikation dennoch zu wenig Sende- und Empfangskanäle 307, 308 (Fig. 3) liefert, bieten diese Chips 301 die Möglichkeit einer Kaskadierung. Das bedeutet, dass mehrere Chips zu einer synchronisierten Radareinheit zusammengefasst werden. Somit wird es möglich Sender gleichzeitig mit einem synchronen Signal senden zu lassen und/oder Empfänger synchron Empfangen zu lassen obwohl diese sich physikalisch auf unterschiedlichen RSoCs befinden.

Das wird möglich, indem neben verschiedenen Taktsynchronisationsleitungen ebenfalls ein Hochfrequenzsignal auf einer Hochfrequenzleitung 401 ausgehend von einem Chip an andere Chips verteilt wird. Das Hochfrequenzsignal wird als Lokaloszillatorsignal (LO-Signal) bezeichnet und ist vom Frequenzbereich her in Bezug auf den Sendefrequenzbereich um einen ganzzahligen Faktor geteiltes Signal.

Möglich sind die Teilerfaktoren zwei oder vier aber auch andere ganzzahlige Teilerfaktoren. Hat der Radarchip beispielsweise einen Sendefrequenzbereich um 80 GHz, so kann das LO-Signal einen Frequenzbereich um 20 GHz oder 40 GHz umfassen.

Der Chip der das Hochfrequenzsignal bereitstellt wird als Master 301a bezeichnet. Die Chips, die das Hochfrequenzsignal empfangen, werden als Slaves 301b bezeichnet.

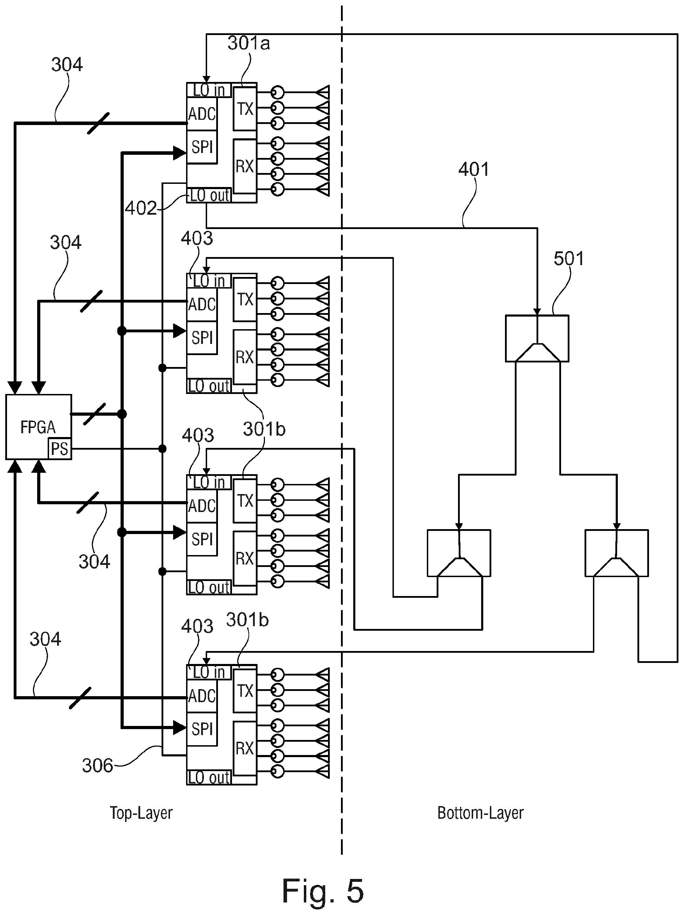

Beispielsweise hat ein kaskadiertes Radarsystem, das vier Radarchips beinhaltet (Figur 5), die wiederum jeweils vier Empfangskanäle aufweisen, sechzehn Digitalschnittstellen über die die zugehörigen Zwischenfrequenzsignale (Messdaten) übertragen werden.

Die Radarchips verwenden zur Verarbeitung dieser digitalen Messdaten meist speziell angepasste Signalprozessoren, die jedoch eine stark begrenzte Anzahl von Digitalschnittstellen aufweisen. Manche Hersteller haben sogar auf dem Radarchip selbst Einheiten zur digitalen Signalverarbeitung integriert, was aber für eine Kaskadierung von Radarchips und im Kontext der radarbasierten, topologiebestimmenden Füllstandmessung nur begrenzt nützlich ist oder gar nicht verwendet werden kann.

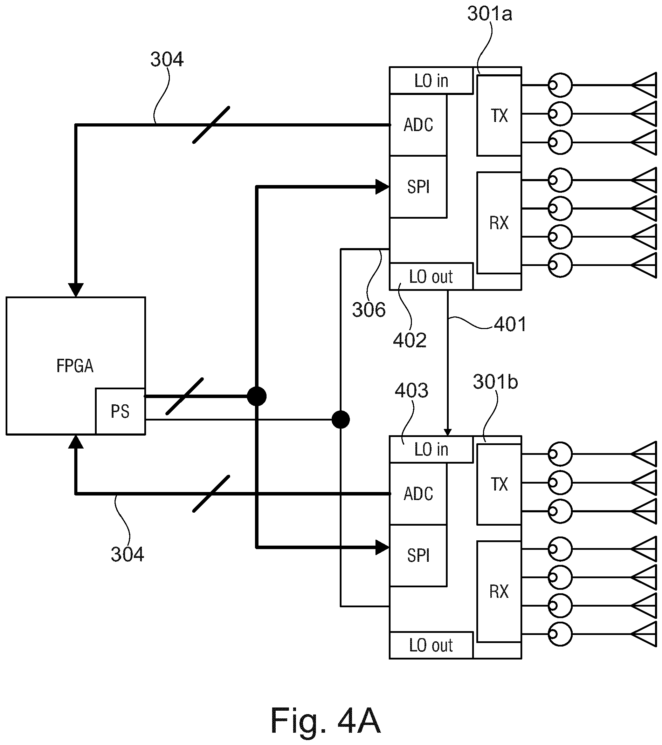

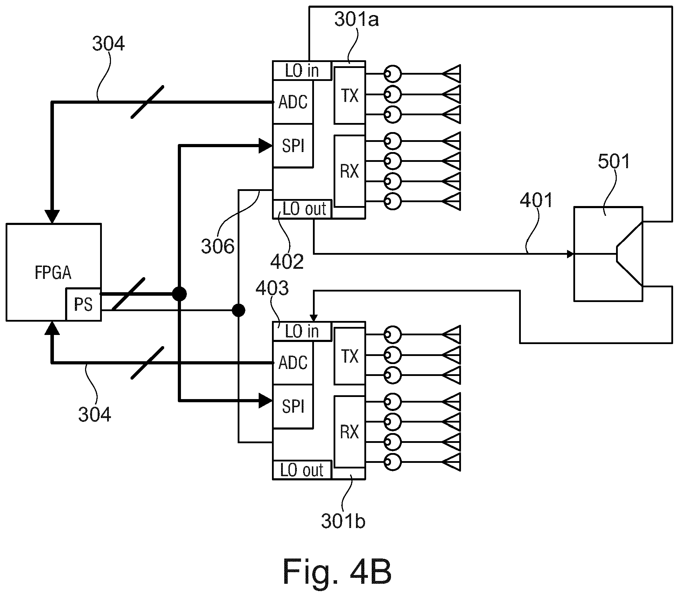

Deshalb wird zur Umgehung dieses Problems vorgeschlagen, anstelle dem speziell angepassten Signalprozessor einen FPGA Baustein (Field Programmable Gate Array) zu verwenden (Figur 3, 4A, 4B und 5). Diese universell einsetzbaren Bausteine, sind von einigen wenigen Herstellern in verschiedenen Ausführungsformen erhältlich. Das FPGA empfängt die digitalisierten Werte des Zwischenfrequenzsignals und übernimmt Rechenoperationen wie Mittelung, Fensterung oder die Berechnung von FFTs (Fast Fourier Transformation). Vorteilhaft an der Kombination aus Radarchips und FPGA ist eine flexible Kombination von acht oder mehr Radarchips, die mit einem speziell angepassten Signalprozessor, wie er in der Automobilindustrie verwendet wird nicht möglich wäre. Durch die Kaskadierung einer solch großen Anzahl von Radarchips wird diese Technologie für die Füllstandmesstechnik interessant.

Wird eine weit größere Anzahl an Radarchips benötigt, ist es möglich, ebenfalls mehrere FPGAs zu verwenden und diese dann ebenfalls untereinander zu synchronisieren.

In vorteilhafter Weise beinhaltet das FPGA neben den programmierbaren Logikzellen ein integriertes Prozessorsystem (PS) das Steuerungsaufgaben, wie die Parametrierung der Radarchips, das Energiemanagement, die Ansteuerung eines Displays oder die Kommunikation mit einem Computer oder einer Prozessleitstelle über ein Netzwerk übernehmen kann. Ebenfalls kann das Prozessorsystem über eine Digitalleitung 306 den Start einer Messung signalisieren.

Weiterhin kann das Prozessorsystem Signalverarbeitungsaufgaben wie sie aus bestehenden Füllstandradarmessgeräten bekannt sind, wie Echosuche, Störechoausblendung, etc. übernehmen.

Je nach Art des Radarchips und des FPGAs kann es notwendig sein, eine Pegelanpassung der Digitalschnittstellen vorzunehmen. Hierfür können ein speziell angepasstes Widerstandsnetzwerk oder ein Anpassungschip verwendet werden. Da die Digitalschnittstellen über die das digitalisierte ZF-Signal übertragen wird meist pro Kanal aus einem differentiellen Adernpaar besteht, müssen je nach FPGA diskrete Leitungsabschlusswiderstände vorgesehen werden. Diese haben meist den Wert von 100 Ohm.

Ein weitere Möglichkeit ist die Verwendung eines oder mehrerer Verstärker mit integriertem Splitter für Niederfrequenzsignale, die ausgehend vom Master, den Start einer Messung signalisieren. Der Master sendet dieses Signal aus und verteilt es an alle Slaves. Wichtig dabei ist, dass die Leitungen in etwa die gleiche Länge aufweisen, damit es keine Zeitversätze in den einzelnen Radarchips gibt.

Da auf diese Art und Weise eine größere Menge an Radarchips kaskadiert werden kann, kann es vorkommen, dass die Ausgangsstufe des LO-Signals nicht ausreichend Ausgangsleistung liefert um alle Radarchips zu treiben. Problematisch an der Verteilung des LO-Signals auf der Hochfrequenzleitung 401 ist, dass Hochfrequenzleitungen eine nicht zu vernachlässigbare Streckendämpfung aufweisen. Da die Radarchips 301 auf der Platine 904 meist mehrere Zentimeter (Größenordnung: 5-10 cm) räumlich voneinander getrennt sind, müssen die Hochfrequenzleitungen 401, die das LO-Signal führen mindestens genau so lang sein. Eine typische Mikrostreifenleitung auf einem Standard-Hochfrequenz-Substrat kann eine Dämpfung von 0,5 bis 2 dB / cm aufweisen. Dies ist hauptsächlich substrat- und frequenzabhängig. Hohlleiter hingegen können so aufgebaut werden, dass sie eine weitaus geringere Streckendämpfung besitzen. Aus diesem Grund macht es Sinn, nachdem das LO-Signal auf die Platine 904 mittels einer Mikrostreifenleitung ausgekoppelt wurde, das Signal in einen Hohlleiter einzukoppeln um weniger Verluste auf der Wegstrecke zum benachbarten Chip einzufahren.

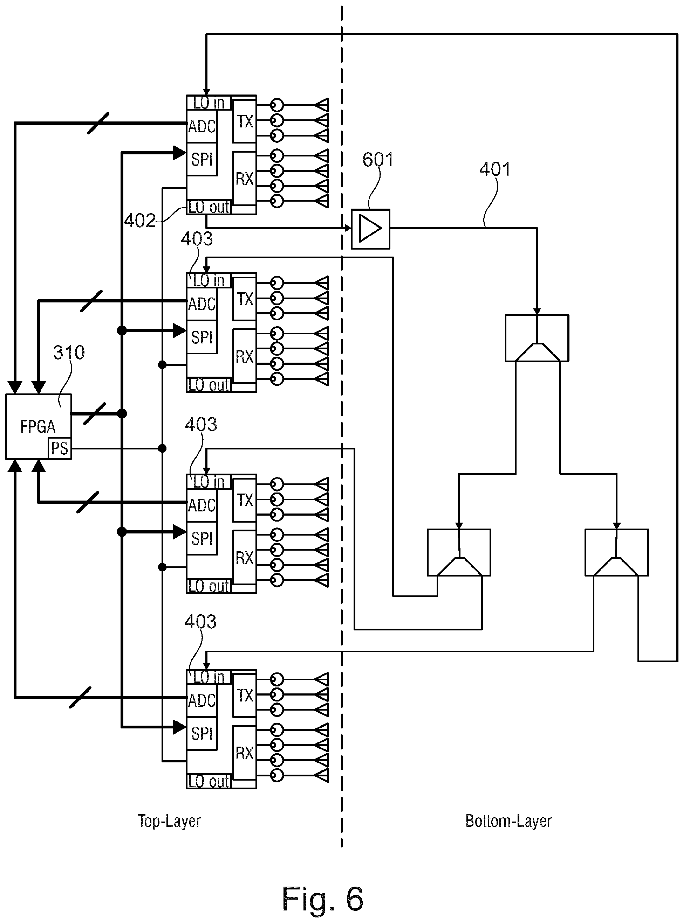

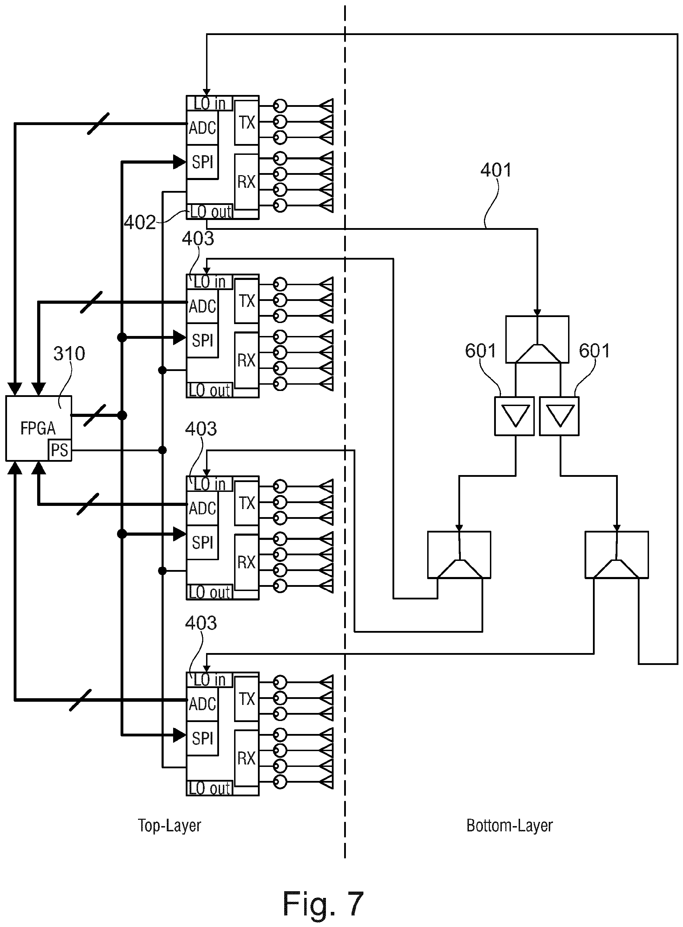

Eine weitere Möglichkeit bieten sich an, indem ein oder mehrere externe Hochfrequenzverstärker 601 eingesetzt werden um die HF-Leistung des LO-Signals auf der Hochfrequenzleitung 401 zu verstärken (Figur 6 und 7). In vorteilhafter Weise haben diese Verstärker eine geringe Rauschzahl (Noise Figure), da diese direkt auf die Systemperformance Auswirkung hat. Deshalb werden hierfür rauscharme Verstärker (engl. Low Noise Amplifiers LNAs) vorgeschlagen. Diese LNAs sind aktive Bauelemente mit separater Spannungsversorgung. In vorteilhafter Weise werden diese zwischen den Radarframes und/oder in Sendepausen abgeschaltet um Energie zu sparen und um eine zu starke Erwärmung des Geräts zu vermeiden.

Weiterhin muss darauf geachtet werden, dass die LNAs in ihrem linearen Bereich betrieben werden, was bedeutet, dass die Eingangsleistung des Hochfrequenzsignals nicht zu groß ist. Ist dies der Fall kann es zu Signalverzerrungen kommen. Technologiebedingt liegen typische Ausgangsleistungen von Halbleiterbauelementen bei 80 GHz zwischen 8 und 15 dBm, ohne dass es zu wesentlichen Signalverzerrungen kommt.

Würde ein Hochfrequenzverstärker 601 mit 20 dB Gain mit einem Hochfrequenzsignal mit einer Leistung von 15 dBm gespeist werden, ergäbe sich theoretisch eine Ausgangsleistung von 35 dBm. Da der Hochfrequenzverstärker 601 dann aber nicht mehr in seinem linearen Bereich arbeiten würde, würde es zu unerwünschten Signalverzerrungen kommen. Deshalb muss das LO-Signal zunächst in einen Leistungsbereich gebracht werden, damit der Hochfrequenzverstärker 601 in seinem linearen Bereich arbeiten kann. Es gibt die Möglichkeit die LO-Ausgangsleistung der Radarchips 301 zu parametrieren und somit zu dämpfen. Ebenfalls kann eine lange Hochfrequenzleitung die Ausgangsleistung ebenfalls dämpfen.

Möglicherweise können die Hochfrequenzverstärker auch erst eingesetzt werden, nachdem das LO-Signal mithilfe eines Hochfrequenzleistungsteilers geteilt und somit in der Leistung niedriger gemacht wurde. Das ist der Fall wenn mehrere Slaves 301b zum Einsatz kommen oder wenn je nach Radarchip 301 das LO-Signal wieder in den Master 301 zurückgeführt werden muss.

Dann müssen mehrere Verstärker eingesetzt werden, wie in Figur 7 zu sehen ist. Da ein Verstärker ebenfalls eine endliche Signaldurchlaufzeit hat, werden in vorteilhafter Weise die Verstärker so platziert, dass sich auf allen Leitungen im Wesentlichen die gleiche Signallaufzeit einstellt.

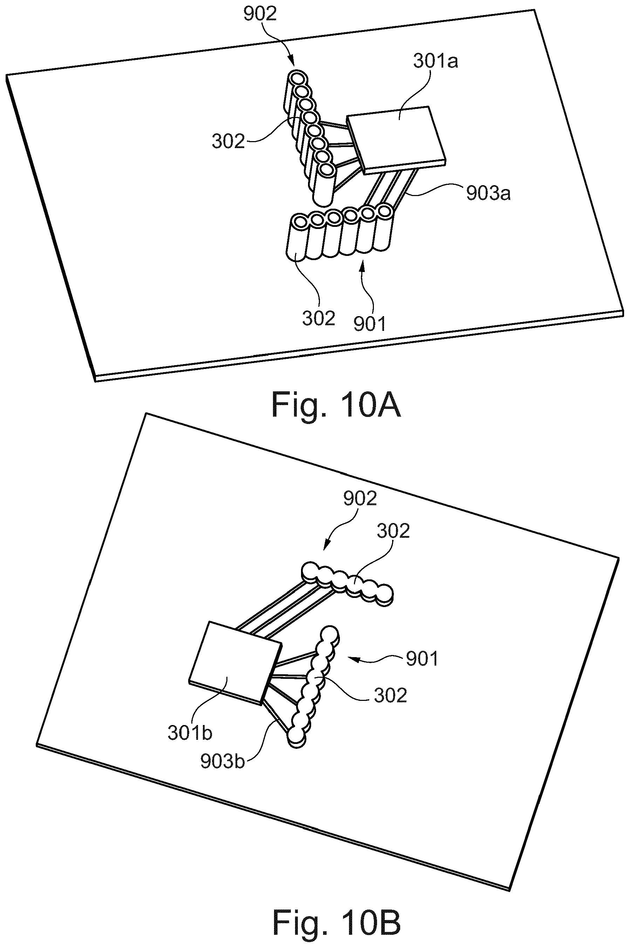

Da es sich beim LO-Signal um ein Hochfrequenzsignal handelt, werden in vorteilhafter Weise Hohlleiter, Mikrostreifenleiter 903 und/oder SIW-Leitungen (Substrate Integrated Waveguide) 1002 (Figur 10) verwendet. Ebenfalls werden zur Aufsplittung der Leitung in vorteilhafter Weise Leistungsteiler 501 (z.B. Wilkinson-Divider) und/oder Koppler 501 (z.B. Rat-Race-Koppler) verwendet.

Beispielsweise werden die Radarchips auf der einen Seite (oder Ebene) 801, 802 der Platine 904 platziert und die Aufsplittung und Verteilung des LO-Signals geschieht auf der anderen Seite bzw. Ebene 808, 809 der Platine 904, so wie in den Figuren 5 bis 7 gezeigt. Ein Grund hierfür wird im Folgenden erläutert.

Die Radarchips besitzen meist neun oder zehn Signaleingänge und Signalausgänge deren Frequenzbereich im zweistelligen Gigahertzbereich liegt. Bei der Kaskadierung der Radarchips müssen neben den Leitungen zu den Sende- und Empfangsantennen noch die LO-Signale von Chip zu Chip geroutet werden. Durch diese Vielzahl an Signalleitungen sind Kreuzungen von Signalen oftmals unausweichlich.

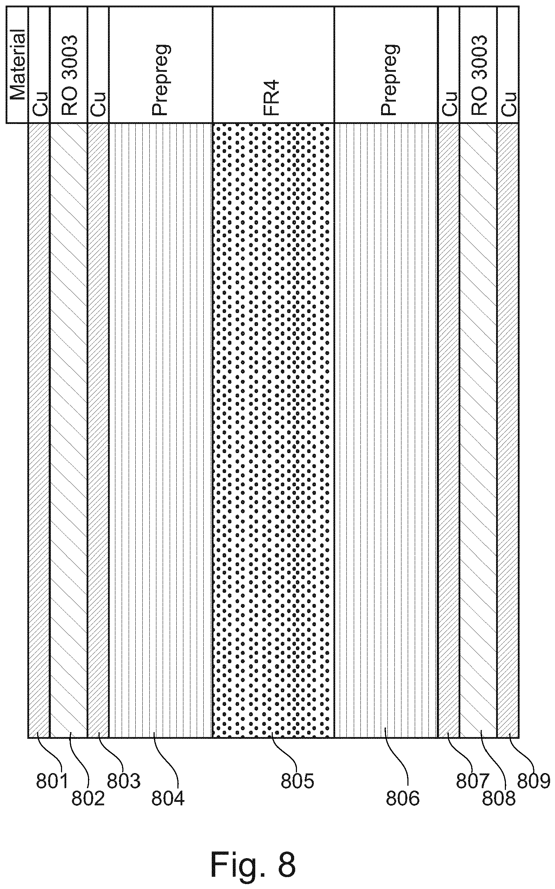

Da jedoch Kreuzungen von Signalleitungen auf einer Platine 904 nicht möglich sind, werden die Signale üblicherweise mit Vias in andere innenliegende Platinenebenen (Innenlagen) 803, 807 geleitet und dort aneinander vorbeigeführt. Ein typischer Platinenlagenaufbau ist in Figur 8 zu sehen, wobei mehrere Substrate mit einer Klebefolie 804, 806 zusammengeklebt werden. Meist sind Innenlagen von Platinen 904 jedoch Standardsubstratmaterialien 804, 805, 806 und nicht für Hochfrequenzsignale geeignet. Aus Kosten- und Stabilitätsgründen werden nämlich oftmals nur eine oder beide der äußersten Substratlagen 802, 808 einer Platine 904 aus speziellem für die Hochfrequenztechnik optimiertem Substratmaterial (Beispielsweise Rogers RO3003) aufgebaut. Hochfrequenzsubstrate sind in der Regel weich und müssen bei hohen Frequenzen sehr dünn ausgeführt werden, beispielsweise mit einer Stärke von 127 µm.

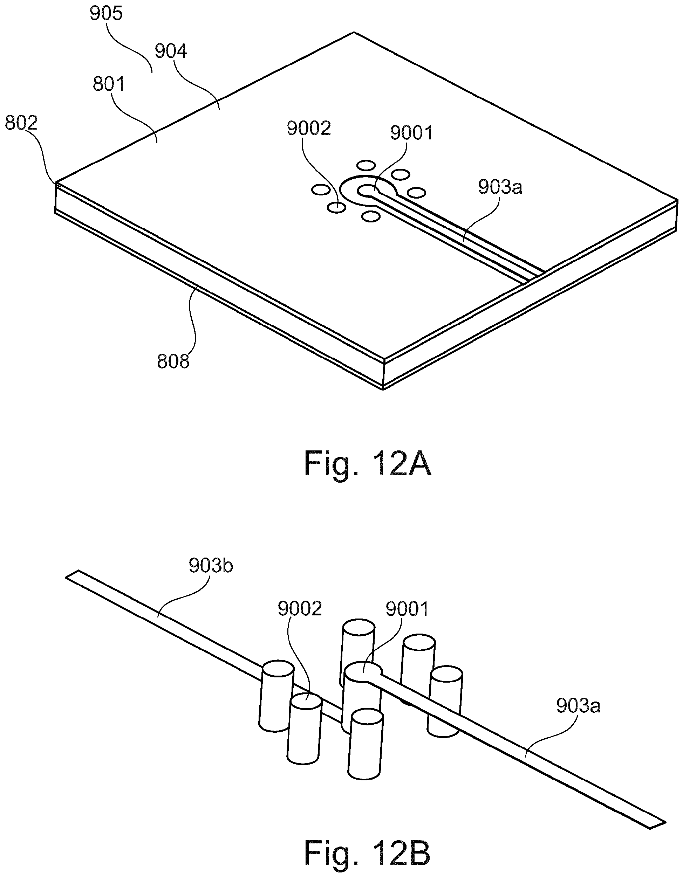

Aus diesen Gründen wird vorgeschlagen, mit speziellen Leitungsstrukturen und Via-Anordnungen das LO-Signal von der chipseitigen Platinenebene auf die Rückseite zu führen, dort zu splitten, ggf. zu verstärken und zu verteilen und wieder auf die chipseitige Platinenebene aufzutauchen. Solche speziellen Leitungsstrukturen und Via-Anordnungen sind in Figuren 12A und 12B zu sehen (Figur 12B zeigt die Leitung und Vias ohne die Substratmaterialien und Kupferflächen). Dabei werden um das Hauptvia 9001 weitere Nebenvias 9002 in einem konstanten Radius platziert und bilden so eine Art koaxiale Leiterplattendurchführung. Viadurchmesser und Abstand zum Hauptvia bestimmen maßgeblich die Impedanz der Durchführung und muss auf den verwendeten Frequenzbereich von beispielsweise 40 GHz angepasst werden.

Eine alternative Möglichkeit, die LO-Signale ohne Kreuzung der Leitungen zu routen, ist, das Signal in einen Hohlleiter oder ein Koaxialkabel einzukoppeln und die Hohlleiter bzw. Koaxialkabel so aufzubauen, dass die Leitungen aneinander vorbeiführen. Um beispielsweise in einen Hohlleiter einzukoppeln, kann ein sogenannter Hohlleiterübergang von der Mikrostreifenleitung auf den Hohlleiter 1101 verwendet werden.

Ein ebenfalls nützlicher Leitungstyp ist der Substrate Integrated Waveguide (SIW). Dieser Leitungstyp wird in vorteilhafter Weise dann verwendet, wenn beispielsweise ein Hohlleiter direkt auf einer Leiterkarte/Platine 904 aufliegt auf der ein LO-/HF-Signal mittels Mikrostreifenleitung unter dem Hohlleiter hindurchgeroutet werden muss. Da der Hohlleiter meist aus einem Metall besteht, würde er die Mikrostreifenleitung kurzschließen, was eine Signalübertragung unmöglich macht. Hier bietet der SIW Vorteile, da dieser auf der Platinenoberseite eine reine Metallfläche aufweist und es keine Rolle spielt ob ein Hohlleiter darüber liegt.

Anschließend muss das Signal wieder auf die Platine 904 in eine Mikrostreifenleitung eingekoppelt werden, um in den Radarchip geroutet werden zu können.

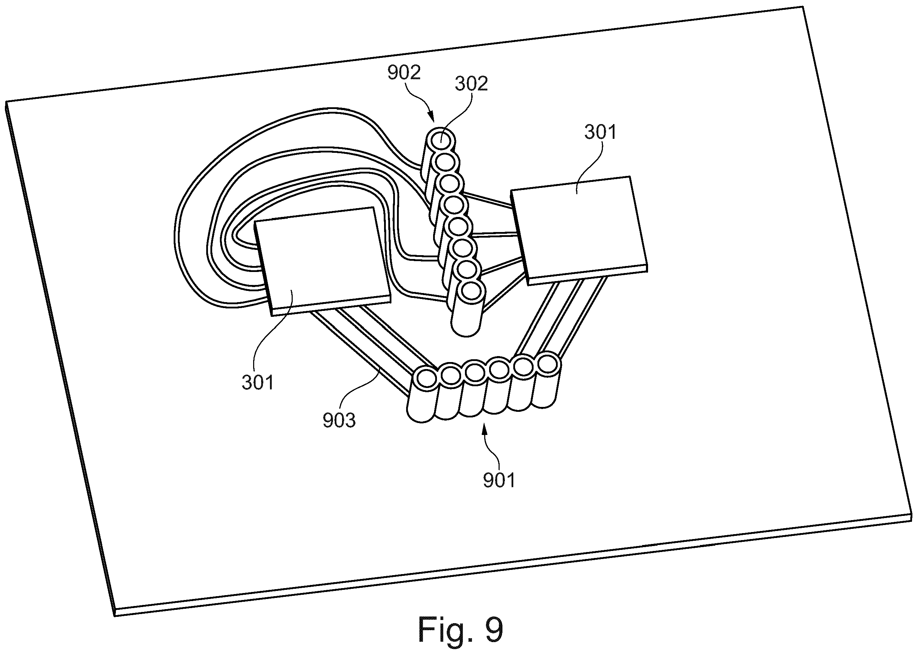

Auf die oben beschriebene Art und Weise können mehrere Radarchips über ein LO-Signal und mehrere Niederfrequenzsignale kaskadiert werden. Da die Radarchips alle das gleiche Gehäuse und die gleiche Pinbelegung aufweisen, kann es bei der Leitungsführung der Hochfrequenzsignale vom Sendepin zur Antenne oder umgekehrt von der Antenne zum Empängerpin zu langen Leitungen kommen (Figur 9), die unerwünscht sind, da lange Hochfrequenzleitungen immer mit großen Verlusten behaftet sind. Diese Probleme werden im Folgenden näher erläutert:
Auszeichnend für Radarfüllstandmessgeräte sind robuste Antennenvorrichtungen, die bei rauen Prozessbedingungen wie hohe und niedrige Drücke, hohen und tiefen Temperaturen, Schmutz, Staub, Feuchtigkeit, Nebel, etc. noch funktionieren. Hinzu kommt, dass die Antennen ebenfalls die Elektronik vor obigen Einflüssen schützen müssen und zusätzlich so konstruiert sein, dass sie ebenfalls sicherheitskritische Aspekte wie Explosionsschutz erfüllen müssen.
So müssen auch bei topologieerfassenden Radarfüllstandmessgeräten diese Eigenschaften gegeben sein. Anders als bei Radargeräten für andere Anwendungen, bei denen solche Anforderungen nicht so hoch sind, werden in der Prozessmesstechnik häufig Hohlleiter und Hornstrahler verwendet.

Es ist bei Systemen zur digitalen Strahlformung vorteilhaft, wenn ein oder mehrere Antennenelemente einen Abstand ≤ λ/2 aufweisen, wobei λ die Wellenlänge des Sendesignals bezeichnet. Für solche Fälle müssen spezielle Hohlleitereinkopplungen 302 verwendet werden, um das Signal von einer Leiterkarte in eine (Horn-)Antenne 303 einzukoppeln.

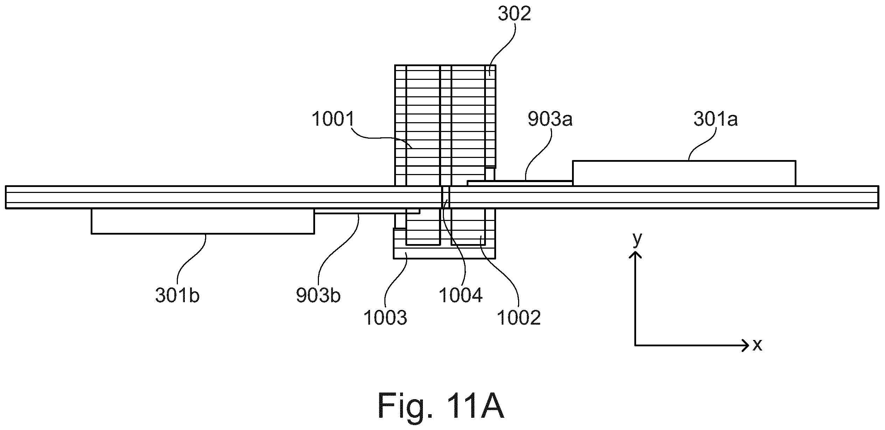

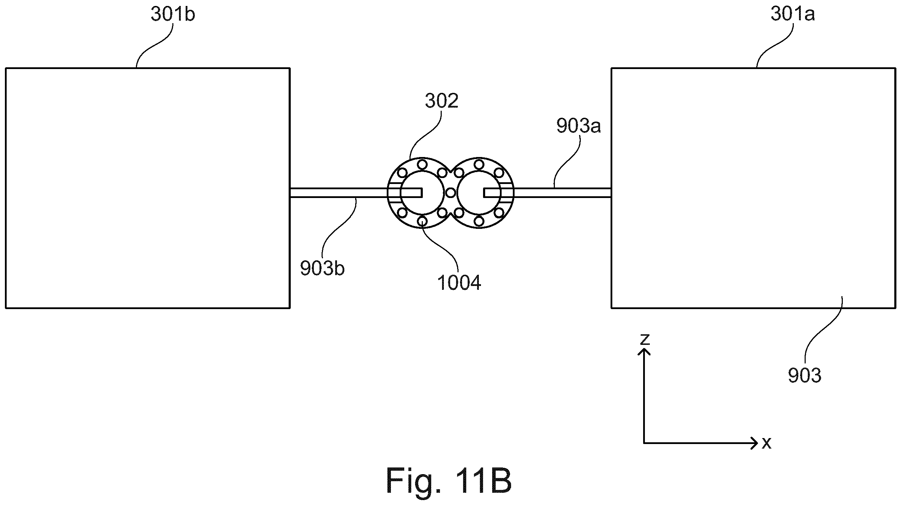

Ein weiteres Problem der topologieerfassenden Radarfüllstandmessgeräte mit kaskadierten Radarchips ist es, dass die oben erwähnten Antennen nur in bestimmten Mustern angeordnet werden dürfen. Ein vorteilhaftes Muster wäre eine T- oder L-förmige Anordnung der Antennenelemente. Um bei den Hochfrequenzsignalen große Leitungslängen zu vermeiden, wie in Figur 9 dargestellt ist, wird vorgeschlagen, die Radarchips 301a, 301b auf der Platinen-Ober- und Unterseite (Figur 10A, 10B, 11A und 11B) zu platzieren, damit die Leitungslängen der Leitungen 903a, 903b von dem jeweiligen Radarchip 301a, 301b zur Hohlleitereinkopplung für alle HF-Signale im Wesentlichen gleich lang sind.

Hierfür werden zusätzlich neben den obengenannten Übergängen weitere Übergänge benötigt, welche durch die Platine hindurch strahlen und die elektromagnetischen Wellen, die über die Leitungen 903 geführt werden, auf der Platinenrückseite in einen Hohlleiter einkoppeln (siehe Figuren 11A, 11B).

Neu ist, dass die verwendeten Backshorts, die einen Hohlraumresonator 1002 bilden, mit einem Dielektrikum 1001 gefüllt werden können. Das kann in diesem Fall wichtig sein, da die Übergänge zwischen Mikrostreifenleitung 903 und Hohlleiter teilweise kleiner als λ/2 sein muss. Ein zusätzliches Dielektrikum im Hohlleiter und im Resonator bewirkt, dass deren Abmessungen kleiner werden.

Das Dielektrikum hat vorzugsweise eine relative Permittivität größer 2, zum Beispiel zwischen 3 und 4 und einen möglichst kleinen Verlustwinkel.

Damit das Radarsignal nicht von einem Hohlleiter in den anderen Hohlleiter überkoppelt, werden in der Platine Vias 1004 platziert.

Das Radarsignal breitet sich im Fall von Figur 11A in y-Richtung aus. Wie in Figur 11B dargestellt ist, können die Hohlleiter 302 innerhalb der Platine durch Vias 1004 in Form von Stiftförmigen Durchkontaktierungen, die im Bereich der Hohlleiterwand ringförmig angeordnet sind, ausgebildet werden. Radarchip 301a und Zuleitung 903a befinden sich beispielsweise auf der ersten Platinenebene 802 und Radarchip 301b und Zuleitung 903b auf der zweiten Platinenebene 808.

Eine Kompensationseinheit oder -schaltung, die vorzugsweise in der Radarsignalauswerteeinheit oder -schaltung, die einen Prozessor aufweist, untergebracht ist, kann die übergangsbedingten Phasen- und Amplitudenversätze in der Signalverarbeitung kompensieren, sodass beispielsweise unterschiedliche Signallaufzeiten, beispielsweise bedingt durch unterschiedliche Übergänge, herausgerechnet werden können. Die Auswerteeinheit kann dabei durch einen FPGA, ASIC, DSP, Mikrokontroller oder vergleichbare Recheneinheiten abgebildet werden. Eine Alternative zur Kompensation bieten die RSoCs dahingehend, dass beim parallelen Senden der Signale die einzelnen Sendekanäle amplituden- und phasenmäßig korrigiert werden können um die oben angesprochenen Phasen- und Amplitudenversätze zu kompensieren. Die sende- und empfangsseitige Kompensationseinheiten können auch gemeinsam betrieben werden.

Um die Radarsignale mit einem Lokaloszillatorsignal zu kaskadieren wird weiterhin vorgeschlagen um vom Master-Chip auf die Platinenrückseite zu kommen, eine koaxiale Leiterplattendurchführung (Figur 12A und Figur 12B) (Via) zu verwenden.

Weiterhin können Radarchips verwendet werden, deren Integrationsdichte nicht so hoch ist wie die der oben genannten Radarchips RSoC 301. Diese MMICs sind häufig ohne Digitalteil ausgeführt. Diese MMICs geben dann die analogen ZF-Signale aus. Auch besteht die Möglichkeit, dass diese Chips keine PLL enthalten oder diese ebenfalls noch in reine Sende- und reine Empfangschips aufgesplittet sind. Diese Chips können jedoch ebenfalls über ein hochfrequentes LO-Signal und ein oder mehrere Niederfrequenzsignale miteinander und auch mit RSoCs kaskadiert werden. Diese MMICs können auch als reine Sender-MMICs oder reine Empfänger-MMICs ausgeführt sein. Dabei kann jeder Sende-MMIC ein oder mehrere Einzelsender aufweisen und jeder Empfänger MMIC ein oder mehrere Einzelempfänger.

Funktional gesehen kann aus einem RSoC ein Sende MMIC gemacht werden, indem die Empfangsketten und die interne PLL per Softwarebefehl abgeschaltet wird. Ebenso kann funktional aus einem RSoC ebenfalls ein Empfangs MMIC gemacht werden indem die Sender intern per Softwarebefehl abgeschaltet werden.

Ein Kerngedanke der Erfindung kann darin gesehen werden, dass ein die Topologie einer Füllgutoberfläche in einem Behälter erfassendes Radarfüllstandmessgerät 101 bereit gestellt wird, bestehend aus (oder aufweisend) mehreren integrierten Radarchips 301, mit einem Hochfrequenzsignal (Lokaloszillatorsignal), das von einem Radarchip 301a generiert und auf einer Hochfrequenzleitung 401 geführt wird, miteinander synchronisiert werden, wobei die Radarchips auf beiden Seiten einer Leiterplatte platziert werden.

Zur Verbindung von Radarchip und Antenne können Übergänge von Mikrostreifenleitung zu Hohlleiter verwendet werden.

Insbesondere können sowohl Übergänge verwendet werden, die durch die Platine hindurchstrahlen und Übergänge, die nicht durch die Platine hindurchstrahlen, wobei die für die durch die Platine hindurchstrahlenden Übergänge benötigten Backshorts beispielsweise mit einem Dielektrikum gefüllt sind.

Es kann vorgesehen sein, dass die Auswerteeinheit für die Radarsignale mit einer Kompensationseinheit ausgestattet ist, um übergangsbedingte Amplituden- und Phasenversätze zu kompensieren.

Auch kann vorgesehen sein, dass die Sendeeinheit für die Radarsignale mit einer Kompensationseinheit ausgestattet ist, um übergangsbedingte Amplituden- und Phasenversätze zu kompensieren.

Die Auswerteeinheit kann ein FPGA, ASIC, DSP oder Mikrocontroller sein.

Es kann vorgesehen sein, dass die Sende- und/oder Empfangskanäle abgeschaltet werden können, um Energie zu sparen und die Erwärmung der Schaltung zu verringern.

Bei zumindest einem der auf der Platinenrückseite platzierten Radarchips kann es sich um einen Sende MMIC, einen Empfangs MMIC oder einen RSoC handeln.

Insbesondere können unter anderem koaxial ausgeführte Leiterplattendurchkontaktierungen verwendet werden, um die Radarchips miteinander zu synchronisieren.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radarfüllstandmessgerät (101) zur Füllstandmessung oder zur Erfassung der Topologie einer Füllgutoberfläche in einem Behälter, aufweisend:
eine Platine (904) mit einer ersten Seite (802) und einer zweiten Seite (808);
einen ersten Radarchip (301a) auf der ersten Seite der Platine und einen zweiten Radarchip (301b) auf der zweiten Seite der Platine;
wobei der erste Radarchip (301a) und der zweite Radarchip (301b) jeweils einen oder mehrere Sendekanäle zum Erzeugen eines Sendesignals und einen oder mehrere Empfangskanäle zum Erfassen der an der Füllgutoberfläche reflektierten Sendesignale aufweisen;
wobei zumindest einer der Sendekanäle des ersten Radarchips über eine erste Leitung (903a) mit einer Antennenanordnung (901, 902) zum Abstrahlen des Sendesignals verbunden ist;
wobei zumindest einer der Empfangskanäle des zweiten Radarchips über eine zweite Leitung (903b) mit der Antennenanordnung (901, 902) zum Empfangen der reflektierten Sendesignale verbunden ist.

2. Radarfüllstandmessgerät (101) nach Anspruch 1,
wobei die Antennenanordnung (901, 902) einen ersten Hohlleiter (302) aufweist, um das Sendesignal in Richtung Füllgutoberfläche abzustrahlen.

3. Radarfüllstandmessgerät (101) nach Anspruch 1,
wobei die Antennenanordnung (901, 902) einen zweiten Hohlleiter (302) aufweist, um das reflektierte Sendesignal zu Empfangen.

4. Radarfüllstandmessgerät (101) nach Anspruch 2 oder 3,
wobei der erste und/oder der zweite Hohlleiter (302) die erste Seite (801) der Platine mit der zweiten Seite (809) der Platine verbindet.

5. Radarfüllstandmessgerät (101) nach einem der Ansprüche 2 bis 4,
wobei der zweite Hohlleiter (302) einen Endbereich (1003) aufweist, der auf der ersten Seite der Platine (904) aufgesetzt ist;
wobei der zweite Hohlleiter einen Hauptbereich aufweist, der auf der zweiten Seite der Platine aufgesetzt ist; und
wobei innerhalb der Platine zwischen dem Endbereich und dem Hauptbereich eine Vielzahl an Durchkontaktierungen (1004) angeordnet ist, um den zweiten Hohlleiter auch innerhalb der Platine auszubilden.

6. Radarfüllstandmessgerät (101) nach einem der Ansprüche 2 bis 5,
wobei der erste und/oder der zweite Hohlleiter in seinem Endbereich (1003) einen Resonanzraum (1002) aufweist, der mit einem Dielektrikum (1001) gefüllt ist.

7. Radarfüllstandmessgerät (101) nach einem der vorhergehenden Ansprüche,
wobei die erste Leitung (903a) auf der ersten Seite (802) der Platine angeordnet ist.

8. Radarfüllstandmessgerät (101) nach einem der vorhergehenden Ansprüche,
wobei die zweite Leitung (903b) auf der zweiten Seite (808) der Platine angeordnet ist.

9. Radarfüllstandmessgerät (101) nach einem der vorhergehenden Ansprüche,
wobei der erste Radarchip eine erste Synchronisationsschaltung (402) aufweist, welche zur Erzeugung eines Hochfrequenzsignals eingerichtet ist;
wobei der zweite Radarchip eine zweite Synchronisationsschaltung (403) aufweist;
weiter aufweisend eine Hochfrequenzleitungsanordnung (401, 501, 421, 422), eingerichtet zur Übertragung des Hochfrequenzsignals von der ersten Synchronisationsschaltung an die zweite Synchronisationsschaltung zur Synchronisation der beiden Radarchips;
wobei die Hochfrequenzleitungsanordnung eine erste Leiterbahn (903a) auf der ersten Seite der Platine, eine zweite Leiterbahn (903b) auf der zweiten Seite der Platine und eine dazwischen angeordnetes Via (9001, 9002, 905) zum Verbinden der ersten und der zweiten Leiterbahn miteinander aufweist.

10. Radarfüllstandmessgerät (101) nach Anspruch 9,
wobei die Hochfrequenzleitungsanordnung (401, 501, 421, 422) zur Übertragung des Hochfrequenzsignals zwei oder mehr unterschiedliche Leitungstypen aufweist, die seriell zueinander angeordnet sind.

11. Radarfüllstandmessgerät nach Anspruch 9 oder 10,
wobei die Hochfrequenzleitungsanordnung (401, 501, 421, 422) einen Hochfrequenzverstärker (601) aufweist, der in der Hochfrequenzleitungsanordnung angeordnet ist und eingerichtet ist zur Verstärkung des Hochfrequenzsignals.

12. Radarfüllstandmessgerät (101) nach einem der Ansprüche 9 bis 11,
wobei die Hochfrequenzleitungsanordnung (401, 501, 421, 422) einen Hohlleiter aufweist.

13. Radarfüllstandmessgerät (101) nach einem der vorhergehenden Ansprüche,
wobei auf dem ersten und dem zweiten Radarchip (301a, 301b) jeweils ein Analog / Digitalwandler integriert ist.

14. Radarfüllstandmessgerät (101) nach einem der vorhergehenden Ansprüche, eingerichtet zur Erfassung der Topologie eines Mediums in einem Behälter.

15. Radarfüllstandmessgerät (101) nach einem der vorhergehenden Ansprüche,
wobei das Füllstandmessgerät (100) als FMCW Füllstandmessgerät ausgeführt ist.

## Claims

1. A radar fill level measurement device (101) for fill level measurement or for recording a topology of a filling material surface in a container, comprising:
a circuit board (904) comprising a first circuit board surface (802) and a second circuit board surface (808); and
a first radar chip (301a) on the first circuit board surface (802) and a second radar chip (301b) on the second circuit board surface (808),
wherein the first radar chip (301a) and the second radar chip (301b) each comprises one or more transmission channels configured to generate a transmission signal, and one or more reception channels configured to receive the transmission signals that are reflected at the filling material surface,
wherein at least one of the transmission channels of the first radar chip (301a) is connected, via a first line (903a), to an antenna assembly (901, 902) for radiating the transmission signal, and
wherein at least one of the reception channels of the second radar chip (301b) is connected, via a second line (903b), to the antenna assembly (901, 902) for receiving the reflected transmission signal.

2. The radar fill level measurement device (101) according to claim 1,
wherein the antenna assembly (901, 902) comprises a first waveguide (302) configured to radiate the transmission signal towards the filling material surface.

3. The radar fill level measurement device (101) according to claim 1,
wherein the antenna assembly (901, 902) comprises a second waveguide (302) configured to receive the reflected transmission signal.

4. The radar fill level measurement device (101) according to claim 2 or 3,
wherein the first waveguide (302) and/or the second waveguide (302) connects the first circuit board surface (802) to the second circuit board surface (808).

5. The radar fill level measurement device (101) according to any one of the claims 2 to 4,
wherein the second waveguide (302) comprises an end region (1003) that is positioned on the first circuit board surface (802) of the circuit board (904),
wherein the second waveguide (302) further comprises a main region that is positioned on the second circuit board surface (808) of the circuit board (904), and
wherein a plurality of through-holes (1004) is arranged, in order to form the second waveguide (302) also inside the circuit board (904).

6. The radar fill level measurement device (101) according to any one of the claims 2 to 5,
wherein the first waveguide (302) and/or the second waveguide (302) comprises a resonant cavity (1002) in an end region (1003) thereof, the resonant cavity (1002) being filled with a dielectric material (1001).

7. The radar fill level measurement device (101) according to any one of the preceding claims,
wherein the first line (903a) is arranged on the first circuit board surface (802).

8. The radar fill level measurement device (101) according to claim 1,
wherein the second line (903b) is arranged on the second circuit board surface (808).

9. The radar fill level measurement device (101) according to claim 1,
wherein the first radar chip (301a) comprises a first synchronisation circuit (402) configured to generate a high-frequency signal,
wherein the second radar chip (301b) comprises a second synchronisation circuit (403),
the device further comprising a high-frequency line assembly (401, 501, 421, 422) configured to transmit the high-frequency signal from the first synchronisation circuit (402) to the second synchronisation circuit (403) in order to synchronise the both radar chips (301a, 301b),
wherein the high-frequency line assembly (401, 501, 421, 422) comprises a first strip conductor (903a) on the first circuit board surface (802), a second strip conductor (903b) on the second circuit board surface (808), and a via (9001, 9002, 905) arranged therebetween configured to interconnect the first strip conductor (903a) and the second strip conductor (903b).

10. The radar fill level measurement device (101) according to claim 9,
wherein the high-frequency line assembly (401, 501, 421, 422), for transferring the high-frequency signal, comprises two or more different line types arranged in series with one another.

11. The radar fill level measurement device (101) according to claim 9 or 10,
wherein the high-frequency line assembly (401, 501, 421, 422) comprises a high-frequency amplifier (601) arranged in the high-frequency line assembly (401, 501, 421, 422) and being configured to amplify the high-frequency signal.

12. The radar fill level measurement device (101) according to any one of the claims 9 to 11,
wherein the high-frequency line assembly (401, 501, 421, 422) further comprises a waveguide.

13. The radar fill level measurement device (101) according to any one of the preceding claims,
wherein in the first radar chip (301a) and in the second radar chip (301b) each an analogue-to-digital converter is integrated.

14. The radar fill level measurement device (101) according to any one of the preceding claims, the device being configured to record a topology of a medium in a container.

15. The radar fill level measurement device (101) according to any one of the preceding claims, the device being configured as a FMCW fill level measurement device.

## Revendications

1. Appareil de mesure de niveau de remplissage à radar (101) destiné à la mesure de niveau de remplissage ou à la détection de la topologie d'une surface d'un produit dans un réservoir, comportant :
une carte (904) ayant un premier côté (802) et un second côté (808) ;
une première puce radar (301a) sur le premier côté de la carte et une seconde puce radar (301b) sur le second côté de la carte ;
la première puce radar (301a) et la seconde puce radar (301b) comportant respectivement un ou plusieurs canaux d'émission pour générer un signal d'émission et un ou plusieurs canaux de réception pour détecter les signaux d'émission réfléchis sur la surface du produit ;
au moins un des canaux d'émission de la première puce radar étant relié à un agencement d'antenne (901, 902) par le biais d'une première ligne (903a) pour l'émission du signal d'émission ;
au moins un des canaux de réception de la seconde puce radar étant relié à l'agencement d'antenne (901, 902) par le biais d'une seconde ligne (903a) pour la réception des signaux d'émission réfléchis.

2. Appareil de mesure de niveau de remplissage à radar (101) selon la revendication 1,
dans lequel l'agencement d'antenne (901, 902) comporte un premier guide d'ondes (302) pour émettre le signal d'émission en direction de la surface du produit.

3. Appareil de mesure de niveau de remplissage à radar (101) selon la revendication 1,
dans lequel l'agencement d'antenne (901, 902) comporte un second guide d'ondes (302) pour recevoir le signal d'émission réfléchi.

4. Appareil de mesure de niveau de remplissage à radar (101) selon la revendication 2 ou 3,
dans lequel le premier et/ou le second guide d'ondes (302) relie le premier côté (801) de la carte au second côté (809) de la carte.

5. Appareil de mesure de niveau de remplissage à radar (101) selon l'une des revendications 2 à 4,
dans lequel le second guide d'ondes (302) comporte une zone d'extrémité (1003) qui est placée sur le premier côté de la carte (904) ;
dans lequel le second guide d'ondes comporte une zone principale qui est placée sur le second côté de la carte ; et
dans lequel une pluralité de trous métallisés (1004) est disposée à l'intérieur de la carte entre la zone d'extrémité et la zone principale pour réaliser le second guide d'ondes également à l'intérieur de la carte.

6. Appareil de mesure de niveau de remplissage à radar (101) selon l'une des revendications 2 à 5,
dans lequel le premier et/ou le second guide d'ondes comporte, dans sa zone d'extrémité (1003), une cavité résonnante (1002), qui est remplie d'un milieu diélectrique (1001).

7. Appareil de mesure de niveau de remplissage à radar (101) selon l'une des revendications précédentes,
dans lequel la première ligne (903a) est disposée sur le premier côté (802) de la carte.

8. Appareil de mesure de niveau de remplissage à radar (101) selon l'une des revendications précédentes,
dans lequel la seconde ligne (903b) est disposée sur le second côté (808) de la carte.

9. Appareil de mesure de niveau de remplissage à radar (101) selon l'une des revendications précédentes,
dans lequel la première puce radar comporte un premier circuit de synchronisation (402), qui est conçu pour générer un signal haute fréquence ;
dans lequel la seconde puce radar comporte un second circuit de synchronisation (403) ;
comportant en outre un agencement de lignes haute fréquence (401, 501, 421, 422), conçu pour transmettre le signal haute fréquence du premier circuit de synchronisation au second circuit de synchronisation pour la synchronisation des deux puces radar ;
dans lequel l'agencement de lignes haute fréquence comporte une première piste conductrice (903a) sur le premier côté de la carte, une seconde piste conductrice (903b) sur le second côté de la carte, et un via (9001, 9002, 905) disposé entre les deux pour relier la première et la seconde piste conductrice entre elles.

10. Appareil de mesure de niveau de remplissage à radar (101) selon la revendication 9,
dans lequel l'agencement de lignes haute fréquence (401, 501, 421, 422) pour la transmission du signal haute fréquence comporte deux types de lignes différents ou plus, qui sont disposés en série.

11. Appareil de mesure de niveau de remplissage à radar selon la revendication 9 ou 10,
dans lequel l'agencement de lignes haute fréquence (401, 501, 421, 422) comporte un amplificateur à haute fréquence (601), qui est disposé dans l'agencement de lignes haute fréquence et qui est conçu pour amplifier le signal haute fréquence.

12. Appareil de mesure de niveau de remplissage à radar (101) selon l'une des revendications 9 à 11,
dans lequel l'agencement de lignes haute fréquence (401, 501, 421, 422) comporte un guide d'ondes.

13. Appareil de mesure de niveau de remplissage à radar (101) selon l'une des revendications précédentes,
dans lequel un convertisseur analogique-numérique est intégré respectivement sur la première et la seconde puce radar (301a, 301b).

14. Appareil de mesure de niveau de remplissage à radar (101) selon l'une des revendications précédentes, conçu pour détecter la topologie d'un milieu dans un réservoir.

15. Appareil de mesure de niveau de remplissage à radar (101) selon l'une des revendications précédentes,
dans lequel l'appareil de mesure de niveau de remplissage (100) est réalisé sous la forme d'un appareil de mesure de niveau de remplissage à onde continue à fréquence modulée.
